(19) Europäisches Patentamt
European Patent Office
Office européen des brevets

(11) **EP 3 532 254 B1**

(12) **EUROPÄISCHE PATENTSCHRIFT**

(45) Veröffentlichungstag und Bekanntmachung des Hinweises auf die Patenterteilung:
**06.04.2022 Patentblatt 2022/14**

(21) Anmeldenummer: **17794943.5**

(22) Anmeldetag: **27.10.2017**

(51) Internationale Patentklassifikation (IPC):
**B25J 9/16** (2006.01)

(52) Gemeinsame Patentklassifikation (CPC):
**B25J 9/1666; B25J 9/1682;** G05B 2219/39135;
G05B 2219/40438

(86) Internationale Anmeldenummer:
**PCT/EP2017/077620**

(87) Internationale Veröffentlichungsnummer:
**WO 2018/078107 (03.05.2018 Gazette 2018/18)**

(54) **VERFAHREN ZUR KOLLISIONSFREIEN BEWEGUNGSPLANUNG**

METHOD FOR COLLISION-FREE MOVEMENT PLANNING

PROCÉDÉ DE PLANIFICATION DE DÉPLACEMENT SANS COLLISION

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **31.10.2016 DE 102016120763**

(43) Veröffentlichungstag der Anmeldung:
**04.09.2019 Patentblatt 2019/36**

(73) Patentinhaber: **Pilz GmbH & Co. KG**
**73760 Ostfildern (DE)**

(72) Erfinder:
• **GRAICHEN, Knut**
**73760 Ostfildern (DE)**
• **VOELZ, Andreas**
**73760 Ostfildern (DE)**
• **BAKOVIC, Daniel**
**73760 Ostfildern (DE)**

(74) Vertreter: **Witte, Weller & Partner Patentanwälte mbB**
**Postfach 10 54 62**
**70047 Stuttgart (DE)**

(56) Entgegenhaltungen:
• **HONG LIU ET AL: "A dynamic subgoal path planner for unpredictable environments", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3. Mai 2010 (2010-05-03), Seiten 994-1001, XP031743259, ISBN: 978-1-4244-5038-1**
• **HONG LIU ET AL: "A Planning Method for Safe Interaction between Human Arms and Robot Manipulators", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2. August 2005 (2005-08-02), Seiten 1814-1820, XP010857337, DOI: 10.1109/IROS.2005.1545241 ISBN: 978-0-7803-8912-0**
• **KALLMANN M ET AL: "Motion planning using dynamic roadmaps", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, Bd. 5, 26. April 2004 (2004-04-26), Seiten 4399-4404, XP010768083, DOI: 10.1109/ROBOT.2004.1302410 ISBN: 978-0-7803-8232-9**

- GHARBI M ET AL: "Roadmap composition for multi-arm systems path planning", INTELLIGENT ROBOTS AND SYSTEMS, 2009. IROS 2009. IEEE/RSJ INTERNATIONAL CONFERENCE ON, IEEE, PISCATAWAY, NJ, USA, 10. Oktober 2009 (2009-10-10), Seiten 2471-2476, XP031580775, ISBN: 978-1-4244-3803-7

**Beschreibung**

Die vorliegende Erfindung betrifft ein Verfahren zur kollisionsfreien Bewegungsplanung eines ersten Manipulators in einem ersten Arbeitsraum und eines zweiten Manipulators in einem zweiten Arbeitsraum sowie eine entsprechende Vorrichtung.

Kollisionsfreie Bewegungsplanung ist in der Robotik die Aufgabe, einen Bewegungspfad für einen Roboter oder seinen Manipulator von einem Startpunkt zu einem Endpunkt aufzufinden, ohne dass es während der Bewegung zu einer Kollision mit einem Hindernis oder mit sich selbst kommt. Ein Verfahren zur kollisionsfreien Bewegungsplanung ist beispielsweise aus der DE 10 2010 007 458 A1 bekannt.

DE 10 2010 007 458 A1 zeigt eine kollisionsfreie Bewegungsplanung für einen Industrieroboter mit einem einzelnen Roboterarm (Manipulator), wie er beispielsweise in modernen Fertigungsanlagen eingesetzt wird. Industrieroboter sind Arbeitsmaschinen zur Handhabung, Montage oder Bearbeitung von Werkstücken. Üblicherweise umfasst ein Industrieroboter mindestens einen Manipulator mit mehreren Bewegungsachsen und eine programmierbare Steuerung, die während des Betriebs die Bewegungsabläufe des Roboters koordiniert, indem sie die Antriebe des Roboters entsprechend ansteuert.

Neben diesen gängigen einarmigen Robotern treten vermehrt Roboter mit zwei oder mehr Armen in den Fokus der Forschung. Insbesondere sind Zweiarmroboter aufgrund ihrer Ähnlichkeit zu Menschen nicht nur für humanoide Roboter eine bevorzugte Ausgestaltung, sondern auch für Roboter im Bereich der Telerobotik, bei der Roboter durch einen menschlichen Operator ferngesteuert werden. Darüber hinaus sind viele Arbeitsplätze in der Industrie originär für den Menschen eingerichtet und somit für eine Zweihandbedienung ausgelegt.

Das Ziel der Bewegungsplanung für einen mehrarmigen Roboter ist grundsätzlich dasselbe wie bei einem einarmigen Roboter, nämlich einem Bewegungspfad für den jeweiligen Arm von einem Startpunkt zu einem Endpunkt aufzufinden, ohne mit einem Hindernis einschließlich sich selbst oder dem jeweils anderen Arm im Arbeitsraum zu kollidieren. Grundsätzlich ist es daher möglich, die bekannten Methoden zur Bewegungsplanung für einarmige Roboter auch für mehrarmige Roboter einzusetzen, wobei der jeweils andere Arm als ein weiteres dynamisches Hindernis im Arbeitsraum betrachtet wird. Die Planung erfolgt dann in einem gemeinsamen Konfigurationsraum unter Anwendung bekannter Verfahren zur Bewegungsplanung. Bekannte Verfahren sind beispielweise probabilistische Verfahren wie Probabilistic Roadmaps (PRM) oder Rapidly-exploring Random Trees (RRT).

Darüber hinaus sind auch entkoppelte Ansätze bekannt, bei denen zunächst die Bewegung jedes Arms einzeln geplant wird und anschließend eine Art Koordinierung stattfindet. Die einzelne Planung erfolgt dabei ebenso basierend auf bekannten Verfahren wie beispielweise die obengenannten probabilistischen Verfahren. Die entkoppelten Ansätze sind insbesondere vorteilhaft in Systemen, in denen nur wenig Interaktion zwischen den einzelnen Armen gegeben ist.

Bei den bekannten gekoppelten und entkoppelten Ansätzen zur Bewegungsplanung von mehrarmigen Robotern werden somit vorwiegend probabilistische Planungsverfahren eingesetzt oder Verfahren basierend auf lokaler Optimierung. Probabilistische Verfahren haben jedoch den Nachteil, dass sie keine deterministischen Trajektorien erzeugen und die benötigte Rechenzeit bei solchen Verfahren zwar begrenzt werden kann, aber im Allgemeinen nicht vorhersehbar ist. Verfahren basierend auf lokaler Optimierung haben den Nachteil, dass sie in komplexen Umgebungen keine Lösungen finden. HONG LIU ET AL, "A dynamic subgoal path planner for unpredictable environments", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA Z Seiten 994-1001, offenbart einen echtzeitfähigen Ansatz zur Bewegungsplanung, bei dem Teilziele dynamisch nach Zeit und potenziellen Werten generiert werden. Der teilzielbasierte Ansatz umfasst zwei Verfahren, einen Teilzielgenerator und einen inneren Planer.

Vor diesem Hintergrund ist es eine Aufgabe der vorliegenden Erfindung, ein alternatives Verfahren zur kollisionsfreien Bewegungsplanung für mehrarmige Robotersysteme anzugeben, welches die oben genannten Nachteile vermeidet. Insbesondere ist es eine Aufgabe, ein Verfahren anzugeben, das eine schnelle deterministische Neuplanung von kollisionsfreien Bewegungen in dynamisch veränderlichen Umgebungen ermöglicht.

Gemäß verschiedener Aspekte der vorliegenden Erfindung wird die Aufgabe gelöst durch ein Verfahren nach einem der unabhängigen Ansprüche.

Es ist somit eine Idee der vorliegenden Erfindung, eine Bewegungsplanung anhand zweier unabhängiger dynamischer Karten für die jeweiligen Manipulatoren durchzuführen.

Dynamische Karten beruhen auf dem Prinzip, dass zunächst ein Graph im Konfigurationsraum eines Roboters generiert wird, wobei eine leere Umgebung, also eine Umgebung ohne Hindernisse, angenommen wird. Zusätzlich werden Abbildungen von Teilen des Arbeitsbereiches zu Knoten und Kanten des Graphen im Konfigurationsraum vorab berechnet und beispielsweise tabellarisch abgelegt. Über die Abbildung kann schnell ein valider Graph für ein beliebiges Hindernis gefunden werden.

Erfindungsgemäß werden nunmehr dynamische Karten in einem entkoppelten Ansatz zur Bewegungsplanung eingesetzt. Der Ansatz hat den Vorteil, dass einmal erstellte dynamische Karten für einen einzelnen Roboterarm wiederverwendet werden können, ohne dass eine dynamische Karte für einen gemeinsamen Arbeitsraum eines mehrarmigen Roboters generiert werden muss. Das neue Verfahren ermöglicht es somit, auf bereits bestehenden Daten aufzubauen.

Die Verwendung dynamischer Karten hat darüber hinaus den Vorteil, dass eine deterministische Neuplanung möglich ist. Deterministische Planer haben den Vorteil, dass sie das Verhalten des Roboters reproduzierbar und für den Menschen transparent machen. Zudem hat die Verwendung von dynamischen Karten den Vorteil, dass durch die Vorausberechnung von dynamischen Karten Planungszeiten von unter 100 Millisekunden auf einem typischen Desktop-PC erreicht werden können, da keine aufwendige Kollisionsprüfung durchgeführt werden muss, sondern eine Kollisionsprüfung anhand der vorabberechneten Abbildungen erfolgen kann.

Insgesamt ermöglicht das neue Verfahren somit kurze Planungszeiten, wodurch eine schnelle Neuplanung in Echtzeit auch auf handelsüblichen Geräten möglich wird. Zudem ist das Verfahren flexibel auf Mehrarmsysteme erweiterbar, wobei auf bereits vorbestimmte dynamische Karten für einzelne Roboterarme zurückgegriffen werden kann.

In einer weiteren Ausgestaltung beinhaltet das Koordinieren der Bewegung das Prüfen auf Kollisionen zwischen dem ersten und dem zweiten Manipulator mittels der ersten Abbildung und der zweiten Abbildung. Die erste und die zweite Abbildung liegen vorzugsweise in tabellarischer Form vor und umfassen eine Zuordnung von Volumenelementen im Arbeitsraum zu Knoten und Kanten der jeweiligen Suchgraphen in den Konfigurationsräumen. Die Verwendung derartiger Abbildungen ermöglicht es für beliebige Hindernisse im Arbeitsraum, einen Graphen im Konfigurationsraum zu überprüfen. Diese Ausgestaltung trägt somit vorteilhaft zur schnellen Neuplanung bei.

Das Koordinieren der Bewegung beinhaltet das Auffinden eines ersten Bewegungspfads für den ersten Manipulator anhand der ersten dynamischen Karte und das Auffinden eines zweiten Bewegungspfads für den zweiten Manipulator anhand der zweiten dynamischen Karte. Gemäß dieser Ausgestaltung werden somit zunächst zwei Bewegungspfade anhand der jeweiligen dynamischen Karte bestimmt. Diese Ausgestaltung trägt dazu bei, dass die Pfadsuche besonders leicht auf kleineren Suchgraphen durchgeführt werden kann.

In einer besonders bevorzugten Ausgestaltung wird der erste Bewegungspfad unabhängig vom zweiten Bewegungspfad bestimmt. Diese Ausgestaltung ermöglicht eine vollständige Trennung der Bestimmung des ersten und des zweiten Bewegungspfads. Dies hat den Vorteil, dass die Berechnung der einzelnen Bewegungspfade unabhängig voneinander erfolgen kann und folglich einfach parallelisiert werden kann. Zudem können bereits existierende dynamische Karten wiederverwendet werden.

In einer weiteren Ausgestaltung definiert der erste Bewegungspfad einen belegten Bereich im Arbeitsraum und der zweite Bewegungspfad wird außerhalb des belegten Bereichs bestimmt. Gemäß dieser Ausgestaltung erfolgt eine priorisierte Planung. Das heißt, ein Manipulator wird als priorisiert betrachtet und dessen Bewegung zunächst unabhängig geplant. Anschließend erfolgt die Planung für den zweiten Manipulator, wobei Bereiche im Arbeitsraum, die durch die Bewegung des ersten Manipulators belegt werden, bei der Planung des weiteren Manipulators als belegt markiert werden. Die strikte Trennung der Arbeitsräume ermöglicht ein einfaches Planungsverfahren.

Gemäß einem ersten bis dritten Aspekt kann das Verfahren das Erstellen eines Koordinationsgraphen basierend auf der ersten dynamischen Karte und der zweiten dynamischen Karte umfassen, wobei das Koordinieren der Bewegung des ersten Manipulators und des zweiten Manipulators auf dem Koordinationsgraphen basiert. Es kann somit zur Koordinierung der Bewegung des ersten Manipulators und des zweiten Manipulators zunächst ein Koordinationsgraph erstellt werden. Der Koordinationsgraph ermöglicht eine koordinierte Planung unter Berücksichtigung beider dynamischen Karten. Es hat sich gezeigt, dass sich durch die Verwendung eines Koordinationsgraphen der Anteil der gelösten Koordinierungsprobleme erhöhen lässt.

Gemäß einem ersten Aspekt beinhaltet das Erstellen des Koordinationsgraphen das Auffinden eines ersten Bewegungspfads für den ersten Manipulator basierend auf der ersten dynamischen Karte, das Auffinden eines zweiten Bewegungspfads für den zweiten Manipulator basierend auf der zweiten dynamischen Karte und das Verknüpfen des ersten und des zweiten Bewegungspfads zum Koordinationsgraphen. In dieser Ausgestaltung wird der Koordinationsgraph durch die Verknüpfung zweier separater Bewegungspfade erstellt. Die Ausgestaltung hat den Vorteil, dass gegenüber einer strikten Trennung der Arbeitsräume mit Priorisierung eines einzelnen Arms, die Planung hier weniger restriktiv und daher flexibler ist. Auf diese Weise kann der Anteil an gelösten Koordinationsproblemen vorteilhaft erhöht werden.

In einer dazu bevorzugten Ausgestaltung wird beim Auffinden des ersten Bewegungspfads für den ersten Manipulator eine Kollision mit dem zweiten Manipulator ignoriert, und beim Auffinden des zweiten Bewegungspfads für den zweiten Manipulator wird eine Kollision mit dem ersten Manipulator ignoriert. Diese Ausgestaltung hat den Vorteil, dass die einzelnen Bewegungspfade zunächst unabhängig und damit schnell geplant werden können, und erst im Koordinationsgraphen eine Überprüfung auf etwaige Kollisionen stattfindet. Diese Ausgestaltung hat den Vorteil, dass ein besonders gutes Verhältnis zwischen Rechenzeit und Anteil an gelösten Koordinierungsproblemen erreicht werden kann.

In einer besonders bevorzugten Ausgestaltung ist darüber hinaus der erste Bewegungspfad für den ersten Manipulator ein erster linearer Graph und der zweite Bewegungspfad für den zweiten Manipulator ein zweiter linearer Graph und der Koordinationsgraph beinhaltet das volle Graphprodukt des ersten und des zweiten linearen Graphen.

Durch die Verwendung des vollen Graphprodukts entsteht ein Koordinationsgraph, der alle möglichen Pfade umfasst, die aus der Kombination der beiden einzelnen Bewegungspfade möglich sind. Von dem Koordinationsgraphen werden folglich sowohl gleichzeitige als auch nacheinander ablaufende Bewegungen der Manipulatoren erfasst.

Gemäß einem zweiten Aspekt beinhaltet das Erstellen des Koordinationsgraphen das Auffinden eines ersten Bewegungspfads für den ersten Manipulator und das Verknüpfen des ersten Bewegungspfads und des zweiten Suchgraphen zum Koordinationsgraphen. In dieser Ausgestaltung wird der erste Manipulator priorisiert und zunächst für diesen ein Bewegungspfad ermittelt. Der Bewegungspfad des ersten Manipulators zusammen mit dem zweiten Suchgraphen ergibt den Koordinationsgraphen. Somit wird die Bewegung des ersten Manipulators entlang seines Bewegungspfads koordiniert und die Bewegung des zweiten Manipulators entlang des zweiten Suchgraphen. Bei der Bewegungsplanung für den zweiten Manipulator wird somit nicht der gesamte von der Bewegung des ersten Manipulators belegte Arbeitsraum geblockt.

In einer bevorzugten Ausgestaltung ist der erste Bewegungspfad für den ersten Manipulator ein erster linearer Graph und der Koordinationsgraph beinhaltet das kartesische Produkt des ersten linearen Graphen mit dem zweiten Suchgraphen. Auf diese Weise kann ein für die Bewegungsplanung effizienter Koordinationsgraph einfach ermittelt werden. Das kartesische Produkt hat den Vorteil, dass ein Graph mit weniger Knoten und Kanten entsteht als bei einem Tensor-Produkt oder einem vollen Graphprodukt.

In einer besonders bevorzugten Ausgestaltung wird beim Auffinden des ersten Bewegungspfads eine Kollision mit dem zweiten Manipulator ignoriert. Diese Ausgestaltung hat den Vorteil, dass der erste Bewegungspfad besonders einfach und schnell ermittelt werden kann.

Gemäß einem dritten Aspekt beinhaltet das Erstellen des Koordinationsgraphen das Verknüpfen des ersten Suchgraphen und des zweiten Suchgraphen zum Koordinationsgraphen. In dieser Ausgestaltung werden somit zunächst der erste und der zweite Suchgraph miteinander verknüpft und anschließend ein Bewegungspfad für den ersten und den zweiten Manipulator anhand des verknüpften Graphen koordiniert.

In einer besonders bevorzugten Ausgestaltung ist der Koordinationsgraph das kartesische Produkt des ersten Suchgraphen und des zweiten Suchgraphen. Die Ausgestaltung hat den Vorteil, dass der Koordinationsgraph nicht unnötig komplex ausgestaltet ist, sondern lediglich die Knoten und Kanten beinhaltet, die für die Pfadsuche vorteilhaft sind.

Gemäß einem vierten Aspekt ist zumindest die erste oder die zweite dynamische Karte eine erweiterte dynamische Karte, die einen Suchgraphen mit Knoten beinhaltet, die zusätzlich Zeitinformationen umfassen, wobei das Koordinieren der Bewegung des ersten Manipulators und des zweiten Manipulators auf der erweiterten dynamischen Karte basiert. In dieser Ausgestaltung enthält zumindest eine der dynamischen Karten zusätzliche Zeitinformationen. Jeder Knoten im Suchgraph umfasst somit nicht nur eine valide Konfiguration, sondern auch eine valide Zeit. Beim Verbinden der Knoten zum Suchgraphen entsteht dabei ein gerichteter Graph. Die Ausgestaltung hat den Vorteil, dass bereits bei der Pfadsuche zumindest teilweise Zeitinformationen berücksichtigt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    ein Ausführungsbeispiel der neuen Vorrichtung,
Fig. 2    ein Blockdiagramm eines Ausführungsbeispiels des neuen Verfahrens zur kollisionsfreien Bewegungsplanung,
Fig. 3    ein Blockdiagramm eines weiteren Ausführungsbeispiels des neuen Verfahrens zur kollisionsfreien Bewegungsplanung, und
Fig. 4    Ausführungsbeispiele verschiedener Koordinationsgraphen.

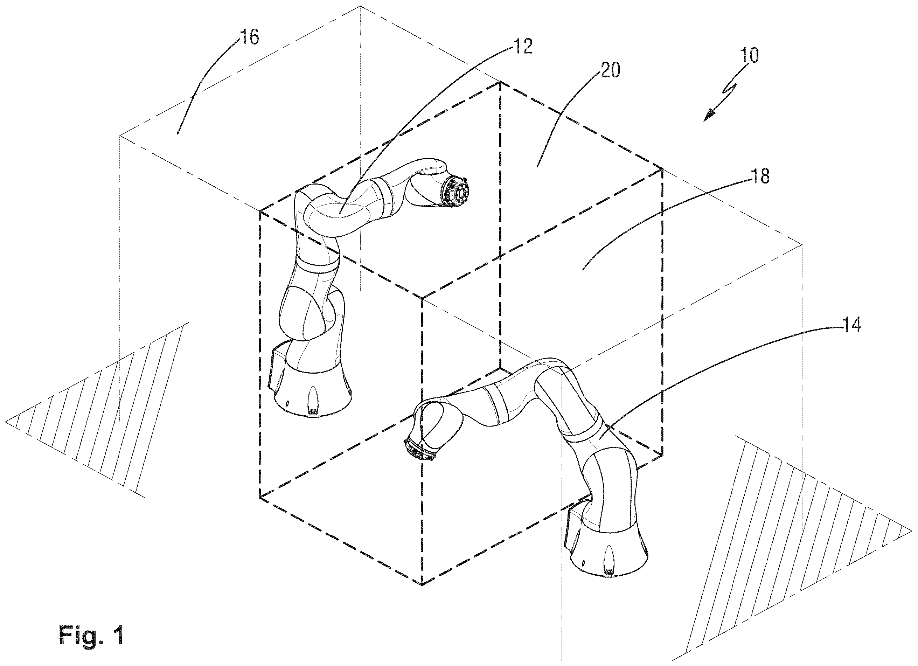

Fig. 1 zeigt ein erstes Ausführungsbeispiel der neuen Vorrichtung. In der Fig. 1 ist die neue Vorrichtung in ihrer Gesamtheit mit der Bezugsziffer 10 bezeichnet.

Die Vorrichtung 10 ist in diesem Ausführungsbeispiel ein Robotersystem mit einem ersten Manipulator 12 und einem zweiten Manipulator 14. Der erste Manipulator 12 und der zweite Manipulator 14 sind in diesem Ausführungsbeispiel eigenständige Roboter, die von einer gemeinsamen Steuerung (hier nicht dargestellt) kontrolliert werden. Der erste und der zweite Manipulator 12, 14 habe je sieben Drehachsen, über die sie im Raum beweglich sind. Das Robotersystem umfasst somit 14 Freiheitsgrade.

Jedem Manipulator ist ein Arbeitsraum 16, 18 zugeordnet, in dem er sich bewegen kann. Die Form und Größe des Arbeitsraums bestimmt sich im Wesentlichen aus der Anzahl und Anordnung der Drehachsen des Roboters sowie deren Bewegungsform. Darüber hinaus kann der Arbeitsraum auch auf eine bestimmte Form eingeschränkt werden, beispielsweise indem der Steuerung softwaretechnisch Grenzen vorgegeben werden. Der Arbeitsraum ist dabei nicht auf die hier dargestellte Quaderform beschränkt, sondern kann in anderen Ausführungsbeispielen auch ein Zylinder, eine Kugel oder ein Polyeder sein.

Der erste Arbeitsraum 16 des ersten Manipulators 12 überlappt den zweiten Arbeitsraum 18 des zweiten Manipulators 14. Der gemeinsame Arbeitsraum 20 ist in der Fig. 1 durch eine gestrichelte Linie angedeutet. Im gemeinsamen Arbeitsraum 20 kann sich sowohl der erste als auch der zweite Manipulator 12, 14 befinden und es kann zu einer Kollision zwischen den beiden Manipulatoren 12, 14 kommen. Folglich muss im gemeinsamen Arbeitsraum 20 die Bewegung der beiden Manipulatoren 12, 14 in Bezug zueinander koordiniert werden. Hierzu führt die gemeinsame Steuerung der beiden Manipulatoren 12, 14 das erfindungsgemäße Verfahren durch, welches in Bezug zu den nachfolgenden Figuren im Einzelnen erläutert wird.

Es versteht sich, dass das hier dargestellte Szenario nur exemplarisch zu verstehen ist. In anderen Ausführungsbeispielen kann das Robotersystem auch einen einzelnen Roboter mit zwei daran angeordneten Manipulatoren aufweisen. Ebenso ist es denkbar, dass die einzelnen Manipulatoren bzw. Roboter eigenständige Steuerungen aufweisen, solange eine gemeinsame Koordinierung der Steuerung möglich ist. Dies kann beispielsweise über geeignete Datenkommunikationsschnittstellen zwischen den Steuerungen ermöglicht werden. Ebenso muss es sich nicht um zwei typgleiche Manipulatoren handeln, die miteinander agieren. In anderen Ausführungsbeispielen können die Manipulatoren unterschiedlich ausgebildet sein. Ebenso können die Arbeitsräume der beiden Manipulatoren in Größe und Form unterschiedlich sein. Die erfindungsgemäße Vorrichtung und das erfindungsgemäße Verfahren sind auch nicht auf zwei Manipulatoren beschränkt. In anderen Ausführungsbeispielen kann das Robotersystem auch weitere Manipulatoren umfassen, die mit dem ersten und/oder dem zweiten Manipulator interagieren. Darüber hinaus versteht sich, dass beim Koordinieren der Manipulatoren daran angeordnete Effektoren wie ein Werkzeug oder ein Greifer sowie etwaige Lasten mitberücksichtigt werden können.

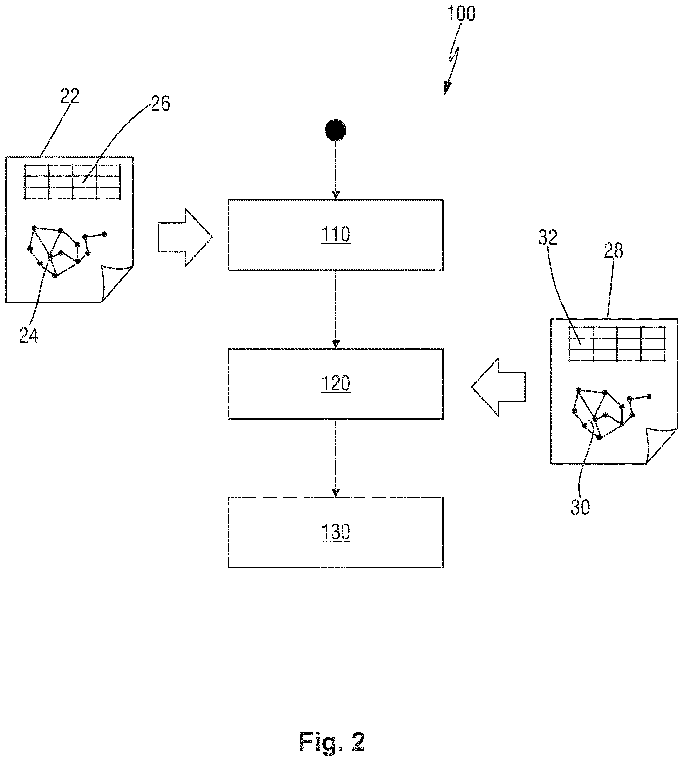

Fig. 2 zeigt in einem Blockschaltbild ein Ausführungsbeispiel des neuen Verfahrens. Das Verfahren ist hier in seiner Gesamtheit mit der Bezugsziffer 100 bezeichnet und im Zusammenhang mit dem Ausführungsbespiel der neuen Vorrichtung gemäß Fig. 1 nachfolgend näher erläutert.

Ein erster Verfahrensschritt 110 umfasst das Einlesen einer ersten dynamischen Karte 22 für einen ersten Konfigurationsraum des ersten Manipulators 12, wobei die erste dynamische Karte einen ersten Suchgraphen 24 und eine erste Abbildung 26 zwischen dem ersten Arbeitsraum 16 und dem ersten Suchgraphen 24 umfasst.

Ein zweiter Verfahrensschritt 120 umfasst das Einlesen einer zweiten dynamischen Karte für einen zweiten Konfigurationsraum des zweiten Manipulators 14, wobei die zweite dynamische Karte 28 einen zweiten Suchgraphen 30 und eine zweite Abbildung 32 zwischen dem zweiten Arbeitsraum 18 und dem zweiten Suchgraphen 30 umfasst.

Der jeweilige Konfigurationsraum eines Manipulators beschreibt dabei den räumlichen Zustand des Manipulators mit einem minimalen Satz von unabhängigen Koordinaten. Der Konfigurationsraum umfasst somit einen Satz von erreichbaren Positionen des Manipulators im (dreidimensionalen) Raum, wobei die Elemente des Manipulators als steife Körper betrachtet werden. Im Allgemeinen stimmt die Anzahl der zur Beschreibung eines Systems mindestens erforderlichen Koordinaten mit der Anzahl der Freiheitsgrade überein.

Der Konfigurationsraum ist somit üblicherweise mehrdimensional und umfasst alle möglichen Zustände, die ein Manipulator einnehmen kann. Ein Zustand wird dabei auch als Konfiguration bezeichnet.

Eine dynamische Karte *(dynamic roadmap,* kurz: DRM) umfasst einen Graphen $G = (V, E)$ im Konfigurationsraum sowie eine Abbildung $\Phi$. Der Graph weist Knoten V und Kanten E auf, wobei die Knoten eine definierte Konfiguration darstellen, und die Kanten eine Bewegung von einer ersten Konfiguration zu einer zweiten Konfiguration. Der Graph einer dynamischen Karte wird aus Stichproben im Konfigurationsraum gebildet, wobei im Falle einer DRM von einer leeren Umgebung, also einer Umgebung ohne Hindernisse, ausgegangen wird. Die Annahme einer leeren Umgebung ermöglicht es, dass die Stichproben aus einer Gleichverteilung gezogen werden und nur Kollisionen mit sich selbst berücksichtigt werden müssen.

Die dynamische Karte enthält darüber hinaus eine Abbildungsvorschrift $\Phi$ vom Arbeitsraum in den Konfigurationsraum (bzw. umgekehrt $\Phi^1$). Diese ist vorzugsweise in Form einer Nachschlagetabelle abgelegt. Zum Erstellen der Nachschlagetabelle wird der Arbeitsbereich in einen Satz von Volumenelementen (sogenannte *voxel*) unterteilt und für jedes Volumenelement $w \in W$ im Arbeitsraum eine Abbildung $\Phi_v : W \to V$ und $\Phi_e: W \to E$ zu den Knoten und Kanten des Graphen $G = (V, E)$ im Konfigurationsraum bestimmt. Sofern ein Volumenelement durch ein Hindernis belegt ist, spezifizieren die Abbildungen die kollidierenden Konfigurationen und Bewegungen im Suchgraphen. Die tabellarische Abbildung ermöglicht es somit, dass auf einfache Weise ein Raumelement im Arbeitsraum einer Anzahl von Knoten und Kanten im Konfigurationsraum zugeordnet werden kann.

Die dynamische Karte für einen Manipulator kann gemäß dem oben beschriebenen Prinzip unabhängig von den weiteren Manipulatoren des Systems generiert werden. Insbesondere kann die dynamische Karte vorberechnet werden, d.h. die dynamische Karte für einen Manipulator bzw. für einen eigenständigen Roboter kann in einer Offline-Phase errechnet und abgespeichert werden. In einer Online-Phase wird die dynamische Karte eingelesen und der Suchgraph zum Auffinden eines Bewegungspfads herangezogen. Beim Auffinden des Bewegungspfads werden dabei Teile des Graphen anhand der Abbildungsvorschrift dynamisch invalidiert. Dies erfolgt, indem dynamische Hindernisse, also Hindernisse, die bei der Vorberechnung der dynamischen Karte nicht berücksichtigt worden sind, online über die tabellarische Abbildung auf Kanten und Knoten im Konfigurationsraum abgebildet werden. Für die anschließende Pfadplanung bleiben die invalidiert Knoten und Kanten unberücksichtigt. Durch die Vorausberechnung und das dynamische Invalidieren des Suchgraphen können Neuplanungen innerhalb von weniger als 100 Millisekunden realisiert werden.

Anhand der beiden dynamischen Karten werden im Verfahrensschritt 130 die Bewegungen des ersten Manipulators und des zweiten Manipulators koordiniert. Hierzu werden im Folgenden vier verschiedene Ansätze erläutert.

Ein erster Ansatz, im Folgenden als *fixed separation* bezeichnet, kann als priorisierte Planung klassifiziert werden. Der Ansatz verfolgt die Idee, den Arbeitsbereich der beiden Manipulatoren streng voneinander zu trennen, so dass keine Kollisionen unabhängig von der Zeit erfolgen können. Hierzu wird der erste Manipulator priorisiert und basierend auf der ersten dynamischen Karte ein Bewegungspfad $u = [u_0, u_1, ..., u_n]$ bestimmt, wobei der zweite Manipulator ignoriert wird. Der Arbeitsbereich $W_{M1}(u)$, der durch den ersten Manipulator bei der Bewegung entlang des Pfads u belegt wird, kann wie folgt dargestellt werden:

$$W_{\mathrm{M1}}(\boldsymbol{u}) = \bigcup_{i=0}^{n} \phi_{v,\mathrm{M1}}^{-1}(u_i) \cup \bigcup_{i=0}^{n-1} \phi_{e,\mathrm{M1}}^{-1}(u_i, u_{i+1})$$

Abgesehen von den Abbildungen für Start- und Endpunkt sowie deren Verbindung zum Graphen der dynamischen Karte sind alle weiteren Abbildungen vorausberechnet und damit direkt verfügbar. Nachdem auch die Konfigurationen für den Start- und Endpunkt sowie deren Verbindungen zur Karte bestimmt worden sind, kann abschließend ein Bewegungspfad für den zweiten Manipulator bestimmt werden, wobei nur der verbleibende Konfigurationsraum $W_{M2} = W \setminus W_{M1}(u)$ berücksichtigt wird.

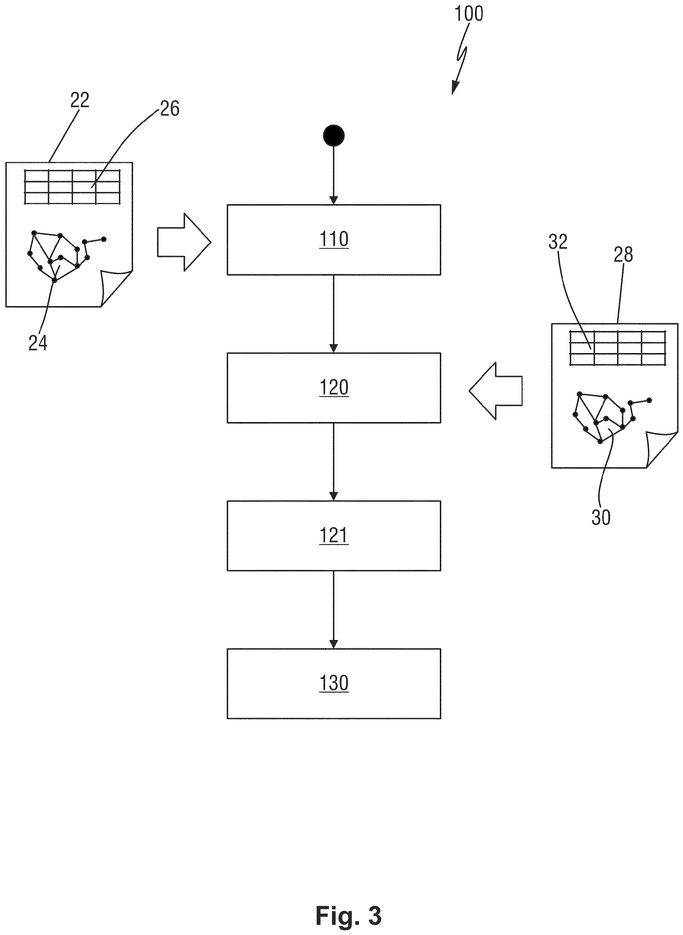

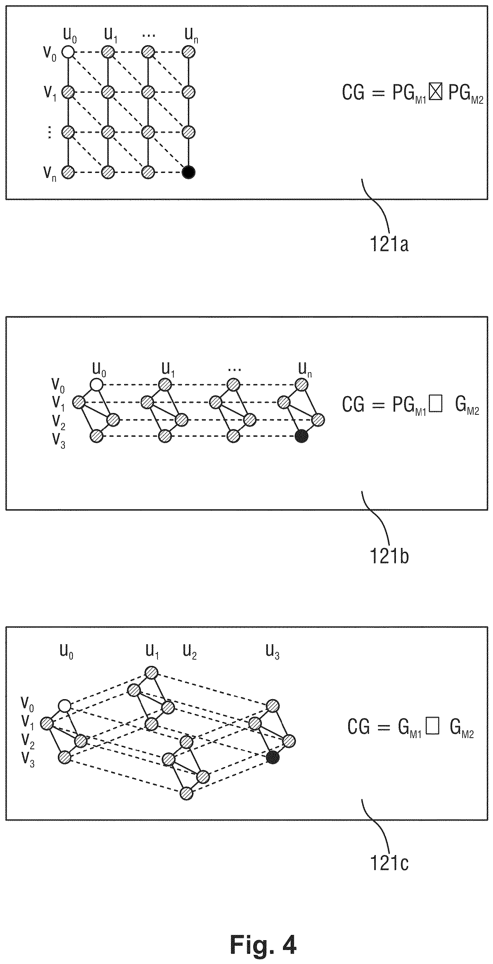

Anhand der Fig. 3 und 4 werden im Folgenden die weiteren drei neuen Ansätze zur Koordinierung der Bewegung des ersten Manipulators und des zweiten Manipulators näher erläutert, die allesamt einen weiteren Verfahrensschritt umfassen.

Fig. 3 zeigt folglich das Verfahren aus Fig. 2 mit einem zusätzlichen Verfahrensschritt 121 zwischen den Schritten 120 und 130. Im Übrigen ist das Verfahren gemäß Fig. 3 identisch zum Verfahren gemäß Fig. 2.

Der weitere Verfahrensschritt 121 umfasst das Erstellen eines Koordinationsgraphen basierend auf der ersten dynamischen Karte und der zweiten dynamischen Karte, anhand dessen die Bewegungsplanung des ersten Manipulators und des zweiten Manipulators erfolgt. Die Ansätze unterscheiden sich jeweils in der Bestimmung dieses Koordinationsgraphen.

Der zweite Ansatz, der im Folgenden auch als *path coordination* bezeichnet wird, ist ein weniger restriktiver Ansatz im Vergleich zu der strengen Trennung der Arbeitsräume, wie sie bei der *fixed separation*-Koordination Anwendung findet. Beim zweiten Ansatz werden zwei unabhängige Bewegungspfade für den ersten und den zweiten Manipulator erzeugt und anschließend die Bewegung entlang dieser Pfade so koordiniert, dass keine Kollision auftritt.

Die Verwendung dynamischer Karten als Basis zur Pfadplanung ermöglicht es, für die Koordinierung zu testen, ob gemeinsame Schnittpunkte der Bewegungspfade gegeben sind. Dies erfolgt anhand der Abbildungsvorschriften $\Phi$ bzw. $\Phi^{-1}$. Eine aufwendige Kollisionsüberprüfung kann so vermieden werden.

Das Ergebnis der unabhängigen Planung ergibt einen ersten Bewegungspfad $u = [u_0, u_1, ..., u_n]$ für den ersten Manipulator und einen zweiten Bewegungspfad $v = [v_0, v_1, ..., v_m]$ für den zweiten Manipulator. Beide Pfade können als lineare Graphen $PG_{M1}$ und $PG_{M2}$ interpretiert werden. Der Koordinationsgraph $CG_{PC}$ ist dann das volle Graphprodukt $CG_{PC} = PG_{M1} \square PG_{M2}$. Graphisch ist ein solcher Koordinationsgraph $CG_{PC}$ für *path coordination* in der Fig. 4 mit der Bezugsziffer 121a angedeutet.

Jeder Konten in $CG_{PC}$ ist ein Paar $(u_i, v_j)$ mit $i = 0, ..., n$ und $j = 0, ..., m$. Kanten zu $(u_{i+1}, v_j)$, $(u_i, v_{j+1})$ und $(u_{i+1}, v_{j+1})$ entsprechen Bewegungen entweder eines Manipulators alleine oder einer parallelen Bewegung beider Manipulatoren.

Es gilt, dass ein Knoten $(u_i, v_j)$ des Koordinationsgraph $CG_{PC}$ valide ist, wenn

$$\phi_{v,\mathrm{M1}}^{-1}(u_i) \cap \phi_{v,\mathrm{M2}}^{-1}(v_j) = \emptyset$$

erfüllt ist.

Eine parallele Bewegung beider Manipulatoren ist valide, wenn

$$\left( \phi_{v,\mathrm{M1}}^{-1}(u_i) \cup \phi_{e,\mathrm{M1}}^{-1}(u_i, u_{i+1}) \cup \phi_{v,\mathrm{M1}}^{-1}(u_{i+1}) \right) \cap \left( \phi_{v,\mathrm{M2}}^{-1}(v_j) \cup \phi_{e,\mathrm{M2}}^{-1}(v_j, v_{j+1}) \cup \phi_{v,\mathrm{M2}}^{-1}(v_{i+1}) \right)$$
$$= \emptyset$$

erfüllt ist.

Für die Bewegung eines einzelnen Arms ist es ausreichend, wenn auf die folgenden Bedingungen getestet wird:

$$\phi_{e,\text{M1}}^{-1}(u_i, u_{i+1}) \cap \phi_{v,\text{M2}}^{-1}(v_j) = \emptyset$$

oder

$$\phi_{v,\text{M1}}^{-1}(u_i) \cap \phi_{e,\text{M2}}^{-1}(v_j, v_{j+1}) = \emptyset$$

Sobald der Koordinationsgraph generiert worden ist, kann eine Koordination erfolgen, indem der kürzeste valide Pfad im Koordinationsgraphen aufgesucht wird. In einem bevorzugten Ausführungsbeispiel können parallele Bewegungen der Arme gegenüber aufeinanderfolgenden Bewegungen einzelner Arme bevorzugt werden, indem Letztere entsprechend negativ bei der Graphsuche gewichtet werden.

Bei der *path coordination* wird weder eine Zeitparametrisierung für die jeweiligen Pfade durchgeführt noch ist die *path coordination* von einer derartigen Zeitparametrisierung abhängig. Eine Zeitparametrisierung, welche die zulässigen Geschwindigkeiten und Beschleunigungen berücksichtigt, kann anschließend am koordinierten Pfad durchgeführt werden. Wenn ein Bewegungspfad des ersten oder des zweiten Manipulators weniger Knoten aufweist als der Bewegungspfad des jeweiligen anderen Manipulators, dann muss ein Manipulator auf jeden Fall zu einem Zeitpunkt warten, während der andere Manipulator in Bewegung ist.

Im Folgenden wird der dritte Ansatz, der auch als *dynamic separation* bezeichnet wird, näher erläutert.

Bei der *dynamic* separation-Koordinierung wird ebenfalls zunächst ein Koordinationsgraph basierend auf der ersten dynamischen Karte und der zweiten dynamischen Karte generiert. Wie bei der *fixed separation* wird der erste Manipulator priorisiert und basierend auf der ersten dynamischen Karte ein valider Bewegungspfad $u = [u_0, u_1, \ldots, u_n]$ bestimmt, wobei der zweite Manipulator ignoriert wird.

Im Gegensatz zur *fixed* separation-Koordination jedoch wird anschließend nicht der gesamte Arbeitsbereich $W_{\text{M1}}(u)$ bei der Bewegungsplanung für den zweiten Manipulator blockiert. Vielmehr wird die Bewegung des ersten Manipulators entlang seines Bewegungspfads $u$ koordiniert, während die Bewegung des zweiten Manipulators entlang des Suchgraphens der zweiten dynamischen Karte koordiniert wird.

Der Koordinationsgraph für die *dynamic* separation-Koordination wird im Gegensatz zur *path coordination* aus dem kartesischen Produkt des linearen Graphen des Pfads u mit dem zweiten Suchgraphen gebildet $CG_{\text{GS}} = PG_{\text{M1}} \square G_{\text{M2}}$. Eine Skizze eines solchen Koordinationsgraphen ist in der Fig. 4 mit der Bezugsziffer 121b angedeutet. Die Verwendung des kartesischen Produkts erzeugt einen Graphen mit weniger Konten und Kanten als bei einem Tensor-Produkt oder einem vollen Graphprodukt und ist somit weniger komplex. Dies kann dadurch ausgeglichen werden, dass im Anschluss an die *dynamic* separation-Koordination eine *path coordination* durchgeführt wird.

Jeder Knoten des Koordinationsgraphen $CG_{\text{GS}}$ entspricht einem Punktepaar $(u_i, v)$, wobei $u_i$ ein Element des Graphen $PG_{\text{M1}}$ ist und v ein Konten des Suchgraphen $G_{\text{M2}}$ der zweiten dynamischen Karte.

Ein Knoten ist valide, wenn $\phi_{v,\text{M1}}^{-1}(u_i) \cap \phi_{v,\text{M2}}^{-1}(v) = \emptyset$ erfüllt ist.

Eine Kante von $(u_i,$v$)$ nach $(u_{i+1},$v$)$ ist valide, wenn $\phi_{e,\text{M1}}^{-1}(u_i, u_{i+1}) \cap \phi_{v,\text{M2}}^{-1}(v) = \emptyset$ erfüllt ist.

Eine Kante von $(u_i,$ v'$)$ ist valide, wenn $\phi_{v,\text{M1}}^{-1}(u_i) \cap \phi_{e,\text{M2}}^{-1}(v, v') = \emptyset$ erfüllt ist.

Die Koordinierung der Bewegung des ersten Manipulators und des zweiten Manipulators erfolgt wie zuvor bei der *path coordination* anhand des Koordinationsgraphen, indem der kürzeste zulässige Pfad in an sich bekannter Weise ermittelt wird. Wie bei der *path coordination* sind ein Großteil der Abbildungen bereits vorabberechnet und tabellarisch abgelegt.

Der vierte Ansatz zur Koordination wird als *graph coordination* bezeichnet. Dabei werden beide Manipulatoren entlang ihrer jeweiligen Suchgraphen $G_{\text{M1}}$ und $G_{\text{M2}}$ koordiniert und eventuelle Überschneidungen ermittelt. Ähnlich wie bei der *dynamic separation* wird bei der *graph coordination* der Koordinationsgraph aus einem kartesischen Produkt gebildet.

Der Koordinationsgraph für *graph coordination* ist das kartesische Produkt des ersten Suchgraphen und des zweiten Suchgraphen $CG_{\text{GC}} = G_{\text{M1}} \square G_{\text{M2}}$ (Fig. 4, 121c). Wie zuvor, wird anschließend die Koordination anhand des Koordinationsgraphen durchgeführt, indem der kürzeste valide Pfad im Koordinationsgraphen gesucht wird.

Bei der *graph coordination* kann die Komplexität des Koordinationsgraphen $CG_{\text{GC}}$ bei größeren dynamischen Karten sehr hoch werden und somit eine Graphsuche unerschwinglich machen. In einem anderen Ausführungsbeispiel kann daher zur Kompensationen auch auf suboptimale Suchalgorithmen zurückgegriffen werden.

Die obengenannten Ansätze können noch weiter optimiert werden, indem mindestens eine der dynamischen Karten durch eine dynamische Karte mit zusätzlichen Zeitinformationen ersetzt wird. Dies hätte den Vorteil, dass bei der Planung bereits zeitliche Aspekte zumindest teilweise berücksichtigt werden können. Je nach Szenario kann so die Pfadsuche weiter verbessert und ggf. beschleunigt werden.

Während die vorstehend genannten Ansätze jeweils als Alternative aufgeführt worden sind, können in anderen Ausführungsbeispielen die einzelnen Ansätze auch vorteilhaft kombiniert werden. Beispielsweise kann im Anschluss an eine *dynamic separation*-Koordination eine *path coordination* durchgeführt werden. Dabei ist es nicht zwingend notwendig, dass eine Nachbereitung mit einem anderen Koordinationsverfahren jedes Mal durchgeführt wird. In anderen Ausführungsbeispielen können die einzelnen Ansätze auch dynamisch verknüpft werden. So ist es denkbar, dass in einem Szenario ein erster Ansatz ausgeführt wird und in einem anderen Szenario ein anderer. Die Ansätze können somit beliebig miteinander verknüpft werden, wobei die jeweilige Auswahl von äußeren Faktoren abhängig sein kann.

Es versteht sich zudem, dass die in Bezug auf zwei Manipulatoren dargestellten Koordinationsverfahren, auch auf Mehrarmsysteme problemlos erweiterbar sind.

## Patentansprüche

1. Verfahren (100) zur kollisionsfreien Bewegungsplanung eines ersten Manipulators (12) in einem ersten Arbeitsraum (16) und eines zweiten Manipulators (14) in einem zweiten Arbeitsraum (18), wobei sich der erste und der zweite Arbeitsraum (16, 18) zumindest teilweise überschneiden, mit den Schritten:

   - Einlesen einer ersten dynamischen Karte (22) für einen ersten Konfigurationsraum des ersten Manipulators (12), wobei die erste dynamische Karte (22) einen ersten Suchgraphen (24) und eine erste Abbildung (26) zwischen dem ersten Arbeitsraum (16) und dem ersten Suchgraphen (24) umfasst;
   - Einlesen einer zweiten dynamischen Karte (28) für einen zweiten Konfigurationsraum des zweiten Manipulators (14), wobei die zweite dynamische Karte (28) einen zweiten Suchgraphen (30) und eine zweite Abbildung (32) zwischen dem zweiten Arbeitsraum (18) und dem zweiten Suchgraphen (30) umfasst;
   - Auffinden eines ersten Bewegungspfads für den ersten Manipulator (12) basierend auf der ersten dynamischen Karte (22); und
   - Auffinden eines zweiten Bewegungspfads für den zweiten Manipulator (14) basierend auf der zweiten dynamischen Karte (28);

   **gekennzeichnet durch**

   - Verknüpfen des ersten und des zweiten Bewegungspfads zu einem Koordinationsgraphen; und
   - Koordinieren der Bewegung des ersten Manipulators (12) und des zweiten Manipulators (14) basierend auf der ersten dynamischen Karte (22) und der zweiten dynamischen Karte (28) anhand des Koordinationsgraphen.

2. Verfahren nach Anspruch 1, wobei das Koordinieren der Bewegung beinhaltet:

   - Prüfen auf Kollisionen zwischen dem ersten und dem zweiten Manipulator (12, 14) mittels der ersten Abbildung (26) und der zweiten Abbildung (32).

3. Verfahren nach Anspruch 1 oder 2, wobei der erste Bewegungspfad unabhängig vom zweiten Bewegungspfad bestimmt wird.

4. Verfahren nach einem der Ansprüche 1 bis 3, wobei der erste Bewegungspfad einen belegten Bereich im ersten Arbeitsraum (16) definiert und der zweite Bewegungspfad außerhalb des belegten Bereichs bestimmt wird.

5. Verfahren nach einem der Ansprüche 1 bis 4, wobei beim Auffinden des ersten Bewegungspfads für den ersten Manipulator (12) eine Kollision mit dem zweiten Manipulator (14) ignoriert wird, und wobei beim Auffinden des zweiten Bewegungspfads für den zweiten Manipulator (14) eine Kollision mit dem ersten Manipulator (12) ignoriert wird.

6. Verfahren nach einem der Ansprüche 1 bis 5, wobei der erste Bewegungspfad für den ersten Manipulator (12) ein erster linearer Graph ist und der zweite Bewegungspfad für den zweiten Manipulator (14) ein zweiter linearer Graph ist, und wobei der Koordinationsgraph das volle Graphprodukt des ersten und des zweiten linearen Graphen beinhaltet.

7. Verfahren zur kollisionsfreien Bewegungsplanung eines ersten Manipulators (12) in einem ersten Arbeitsraum (16) und eines zweiten Manipulators (14) in einem zweiten Arbeitsraum (18), wobei sich der erste und der zweite Arbeitsraum (16, 18) zumindest teilweise überschneiden, mit den Schritten:

- Einlesen einer ersten dynamischen Karte (22) für einen ersten Konfigurationsraum des ersten Manipulators (12), wobei die erste dynamische Karte (22) einen ersten Suchgraphen (24) und eine erste Abbildung (26) zwischen dem ersten Arbeitsraum (16) und dem ersten Suchgraphen (24) umfasst;
- Einlesen einer zweiten dynamischen Karte (28) für einen zweiten Konfigurationsraum des zweiten Manipulators (14), wobei die zweite dynamische Karte (28) einen zweiten Suchgraphen (30) und eine zweite Abbildung (32) zwischen dem zweiten Arbeitsraum (18) und dem zweiten Suchgraphen (30) umfasst; und
- Auffinden eines ersten Bewegungspfads für den ersten Manipulator (12);

**gekennzeichnet durch**

- Verknüpfen des ersten Bewegungspfads und des zweiten Suchgraphen (30) zu einem Koordinationsgraphen; und
- Koordinieren der Bewegung des ersten Manipulators (12) und des zweiten Manipulators (14) basierend auf der ersten dynamischen Karte (22) und der zweiten dynamischen Karte (28) anhand des Koordinationsgraphen.

8. Verfahren nach Anspruch 7, wobei der erste Bewegungspfad für den ersten Manipulator (12) ein erster linearer Graph ist, und wobei der Koordinationsgraph das kartesische Produkt des ersten linearen Graphen und des zweiten Suchgraphen (30) beinhaltet.

9. Verfahren nach einem der Ansprüche 7 oder 8, wobei beim Auffinden des ersten Bewegungspfads eine Kollision mit dem zweiten Manipulator (14) ignoriert wird.

10. Verfahren zur kollisionsfreien Bewegungsplanung eines ersten Manipulators (12) in einem ersten Arbeitsraum (16) und eines zweiten Manipulators (14) in einem zweiten Arbeitsraum (18), wobei sich der erste und der zweite Arbeitsraum (16, 18) zumindest teilweise überschneiden, mit den Schritten:

- Einlesen einer ersten dynamischen Karte (22) für einen ersten Konfigurationsraum des ersten Manipulators (12), wobei die erste dynamische Karte (22) einen ersten Suchgraphen (24) und eine erste Abbildung (26) zwischen dem ersten Arbeitsraum (16) und dem ersten Suchgraphen (24) umfasst; und
- Einlesen einer zweiten dynamischen Karte (28) für einen zweiten Konfigurationsraum des zweiten Manipulators (14), wobei die zweite dynamische Karte (28) einen zweiten Suchgraphen (30) und eine zweite Abbildung (32) zwischen dem zweiten Arbeitsraum (18) und dem zweiten Suchgraphen (30) umfasst;

**gekennzeichnet durch**

- Verknüpfen des ersten Suchgraphen (24) und des zweiten Suchgraphen (30) zum Koordinationsgraphen; und
- Koordinieren der Bewegung des ersten Manipulators (12) und des zweiten Manipulators (14) basierend auf der ersten dynamischen Karte (22) und der zweiten dynamischen Karte (28) anhand des Koordinationsgraphen.

11. Verfahren nach Anspruch 10, wobei der Koordinationsgraph das kartesische Produkt des ersten Suchgraphen (24) und des zweiten Suchgraphen (30) ist.

12. Verfahren zur kollisionsfreien Bewegungsplanung eines ersten Manipulators (12) in einem ersten Arbeitsraum (16) und eines zweiten Manipulators (14) in einem zweiten Arbeitsraum (18), wobei sich der erste und der zweite Arbeitsraum (16, 18) zumindest teilweise überschneiden, mit den Schritten:

- Einlesen einer ersten dynamischen Karte (22) für einen ersten Konfigurationsraum des ersten Manipulators (12), wobei die erste dynamische Karte (22) einen ersten Suchgraphen (24) und eine erste Abbildung (26) zwischen dem ersten Arbeitsraum (16) und dem ersten Suchgraphen (24) umfasst; und
- Einlesen einer zweiten dynamischen Karte (28) für einen zweiten Konfigurationsraum des zweiten Manipulators (14), wobei die zweite dynamische Karte (28) einen zweiten Suchgraphen (30) und eine zweite Abbildung (32) zwischen dem zweiten Arbeitsraum (18) und dem zweiten Suchgraphen (30) umfasst;

**gekennzeichnet durch**

- Koordinieren der Bewegung des ersten Manipulators (12) und des zweiten Manipulators (14) basierend auf der ersten dynamischen Karte (22) und der zweiten dynamischen Karte (28), wobei die erste oder die zweite dynamische Karte (22, 28) eine erweiterte dynamische Karte ist, die einen erweiterten Suchgraphen mit Knoten beinhaltet, die zusätzliche Zeitinformationen umfassen.

13. Vorrichtung mit einem ersten Manipulator (12) und einem zweiten Manipulator (14) sowie mit einer Steuereinheit zur dynamischen Bewegungsplanung, wobei die Steuereinheit dazu ausgebildet ist, ein Verfahren gemäß einem der Ansprüche 1 bis 12 auszuführen.

**Claims**

1. A method (100) for collision-free motion planning of a first manipulator (12) in a first working space (16) and a second manipulator (14) in a second working space (18), wherein the first working space (16) and the second working space (18) at least partially overlap, comprising the steps of:

- Importing a first dynamic roadmap (22) for a first configuration space of the first manipulator (12), wherein the first dynamic roadmap (22) includes a first search graph (24) and a first mapping (26) between the first working space (16) and the first search graph (24);
- Importing a second dynamic roadmap (28) for a second configuration space of the second manipulator (14), wherein the second dynamic roadmap (28) includes a second search graph (30) and a second mapping (32) between the second working space (18) and the second search graph (30);
- Determining a first motion path for said first manipulator (12) from said first dynamic roadmap (22); and
- Determining a second motion path for the second manipulator (14) from said second dynamic roadmap (28); and

**characterized by**

- Linking the first motion path and second motion path to a coordination graph; and
- Coordinating the motion of the first manipulator (12) and of the second manipulator (14) based on the first dynamic roadmap (22) and the second dynamic roadmap (28) by means of the coordination graph.

2. The method according to claim 1, wherein coordinating the motion includes:

- Checking for collisions between the first manipulator (12) and the second manipulator (14) by means of the first mapping (26) and the second mapping (32).

3. The method according to claim 1 or 2, where the first motion path is determined independently of the second motion path.

4. The method according to any one of claims 1 to 3, wherein the first motion path defines an occupied area in the first working space (16) and the second motion path is determined outside the occupied area.

5. The method according to any one of claims 1 to 4, wherein, for determining the first motion path for the first manipulator (12), a collision with the second manipulator (14) is ignored, and wherein, for determining the second motion path for the second manipulator (14), a collision with the first manipulator (12) is ignored.

6. The method according to any one of claims 1 to 5, wherein the first motion path for the first manipulator (12) is a first linear graph and the second motion path for the second manipulator (14) is a second linear graph, and wherein the coordination graph includes the full graph product of the first and second linear graphs.

7. A method for collision-free motion planning of a first manipulator (12) in a first working space (16) and a second manipulator (14) in a second working space (18), wherein the first working space (16) and the second working space (18) at least partially overlap, comprising the steps of:

- Importing a first dynamic roadmap (22) for a first configuration space of the first manipulator (12), wherein the first dynamic roadmap (22) includes a first search graph (24) and a first mapping (26) between the first working space (16) and the first search graph (24);
- Importing a second dynamic roadmap (28) for a second configuration space of the second manipulator (14), wherein the second dynamic roadmap (28) includes a second search graph (30) and a second mapping (32) between the second working space (18) and the second search graph (30); and
- Determining a first motion path for the first manipulator (12);

**characterized by**

- Linking the first motion path and the second search graph (30) to a coordination graph; and
- Coordinating the motion of the first manipulator (12) and of the second manipulator (14) based on the first dynamic roadmap (22) and the second dynamic roadmap (28) by means of the coordination graph.

8. The method according to claim 7, wherein the first motion path for the first manipulator (12) is a first linear graph, and wherein the coordination graph is the Cartesian product of the first linear graph and the second search graph (30).

9. The method according to claims 7 or 8, wherein, for determining the first motion path, a collision with the second manipulator (14) is ignored.

10. A method for collision-free motion planning of a first manipulator (12) in a first working space (16) and a second manipulator (14) in a second working space (18), wherein the first working space (16) and the second working space (18) at least partially overlap, comprising the steps of:

- Importing a first dynamic roadmap (22) for a first configuration space of the first manipulator (12), wherein the first dynamic roadmap (22) includes a first search graph (24) and a first mapping (26) between the first working space (16) and the first search graph (24); and
- Importing a second dynamic roadmap (28) for a second configuration space of the second manipulator (14), wherein the second dynamic roadmap (28) includes a second search graph (30) and a second mapping (32) between the second working space (18) and the second search graph (30);

**characterized by**

- Linking the first search graph (24) and the second search graph (30) to a coordination graph; and
- Coordinating the motion of the first manipulator (12) and of the second manipulator (14) based on the first dynamic roadmap (22) and the second dynamic roadmap (28) by means of the coordination graph.

11. The method according to claim 10, wherein the coordination graph is the Cartesian product of the first search graph (24) and the second search graph (30).

12. A method for collision-free motion planning of a first manipulator (12) in a first working space (16) and a second manipulator (14) in a second working space (18), wherein the first working space (16) and the second working space (18) at least partially overlap, comprising the steps of:

- Importing a first dynamic roadmap (22) for a first configuration space of the first manipulator (12), wherein the first dynamic roadmap (22) includes a first search graph (24) and a first mapping (26) between the first working space (16) and the first search graph (24); and
- Importing a second dynamic roadmap (28) for a second configuration space of the second manipulator (14), wherein the second dynamic roadmap (28) includes a second search graph (30) and a second mapping (32) between the second working space (18) and the second search graph (30);

**characterized by**

- Coordinating the motion of the first manipulator (12) and of the second manipulator (14) based on the first dynamic roadmap (22) and the second dynamic roadmap (28), wherein at least one of the first dynamic roadmap (22) and the second dynamic roadmap (28) is an extended dynamic roadmap including an extended search graph with nodes comprising additional time information.

13. An apparatus comprising a first manipulator (12) and a second manipulator (14) and a control unit for dynamic motion planning, wherein the control unit is configured to perform the method according to any one of claims 1 to 12.

**Revendications**

1. Procédé (100) de planification de déplacement sans collision d'un premier manipulateur (12) dans un premier espace de travail (16) et d'un deuxième manipulateur (14) dans un deuxième espace de travail (18), le premier et le deuxième espace de travail (16, 18) se recoupant au moins en partie, comprenant les étapes consistant à :

   - lire une première carte dynamique (22) pour un premier espace de configuration du premier manipulateur (12), la première carte dynamique (22) comprenant un premier graphe de recherche (24) et une première représentation (26) entre le premier espace de travail (16) et le premier graphe de recherche (24) ;
   - lire une deuxième carte dynamique (28) pour un deuxième espace de configuration du deuxième manipulateur (14), la deuxième carte dynamique (28) comprenant un deuxième graphe de recherche (30) et une deuxième représentation (32) entre le deuxième espace de travail (18) et le deuxième graphe de recherche (30) ;
   - localiser un premier chemin de déplacement pour le premier manipulateur (12) sur la base de la première carte dynamique (22) ; et
   - localiser un deuxième chemin de déplacement pour le deuxième manipulateur (14) sur la base de la deuxième carte dynamique (28) ;

   **caractérisé par** les étapes consistant à

   - relier le premier et le deuxième chemin de déplacement en un graphe de coordination ; et
   - coordonner le déplacement du premier manipulateur (12) et du deuxième manipulateur (14) sur la base de la première carte dynamique (22) et de la deuxième carte dynamique (28) à l'aide du graphe de coordination.

2. Procédé selon la revendication 1, la coordination du déplacement comportant l'étape consistant à :

   - vérifier des collisions entre le premier et le deuxième manipulateur (12, 14) au moyen de la première représentation (26) et de la deuxième représentation (32).

3. Procédé selon la revendication 1 ou 2, dans lequel le premier chemin de déplacement est déterminé indépendamment du deuxième chemin de déplacement.

4. Procédé selon l'une quelconque des revendications 1 à 3, dans lequel le premier chemin de déplacement définit une zone occupée dans le premier espace de travail (16) et le deuxième chemin de déplacement est déterminé à l'extérieur de la zone occupée.

5. Procédé selon l'une quelconque des revendications 1 à 4, dans lequel, lors de la localisation du premier chemin de déplacement pour le premier manipulateur (12), une collision avec le deuxième manipulateur (14) est ignorée, et lors de la localisation du deuxième chemin de déplacement pour le deuxième manipulateur (14), une collision avec le premier manipulateur (12) est ignorée.

6. Procédé selon l'une quelconque des revendications 1 à 5, dans lequel le premier chemin de déplacement pour le premier manipulateur (12) est un premier graphe linéaire et le deuxième chemin de déplacement pour le deuxième manipulateur (14) est un deuxième graphe linéaire, et le graphe de coordination comporte le produit de graphes entier du premier et du deuxième graphe linéaire.

7. Procédé de planification de déplacement sans collision d'un premier manipulateur (12) dans un premier espace de travail (16) et d'un deuxième manipulateur (14) dans un deuxième espace de travail (18), le premier et le deuxième espace de travail (16, 18) se recoupant au moins en partie, comprenant les étapes consistant à :

   - lire une première carte dynamique (22) pour un premier espace de configuration du premier manipulateur (12), la première carte dynamique (22) comprenant un premier graphe de recherche (24) et une première représentation (26) entre le premier espace de travail (16) et le premier graphe de recherche (24) ;
   - lire une deuxième carte dynamique (28) pour un deuxième espace de configuration du deuxième manipulateur (14), la deuxième carte dynamique (28) comprenant un deuxième graphe de recherche (30) et une deuxième représentation (32) entre le deuxième espace de travail (18) et le deuxième graphe de recherche (30) ; et
   - localiser un premier chemin de déplacement pour le premier manipulateur (12) ;

   **caractérisé par** les étapes consistant à

- relier le premier chemin de déplacement et le deuxième graphe de recherche (30) en un graphe de coordination ; et
- coordonner le déplacement du premier manipulateur (12) et du deuxième manipulateur (14) sur la base de la première carte dynamique (22) et de la deuxième carte dynamique (28) à l'aide du graphe de coordination.

8. Procédé selon la revendication 7, dans lequel le premier chemin de déplacement pour le premier manipulateur (12) est un premier graphe linéaire, et le graphe de coordination comporte le produit cartésien du premier graphe linéaire et du deuxième graphe de recherche (30).

9. Procédé selon l'une quelconque des revendications 7 ou 8, dans lequel, lors de la localisation du premier chemin de déplacement, une collision avec le deuxième manipulateur (14) est ignorée.

10. Procédé de planification de déplacement sans collision d'un premier manipulateur (12) dans un premier espace de travail (16) et d'un deuxième manipulateur (14) dans un deuxième espace de travail (18), le premier et le deuxième espace de travail (16, 18) se recoupant au moins en partie, comprenant les étapes consistant à :

- lire une première carte dynamique (22) pour un premier espace de configuration du premier manipulateur (12), la première carte dynamique (22) comprenant un premier graphe de recherche (24) et une première représentation (26) entre le premier espace de travail (16) et le premier graphe de recherche (24) ; et
- lire une deuxième carte dynamique (28) pour un deuxième espace de configuration du deuxième manipulateur (14), la deuxième carte dynamique (28) comprenant un deuxième graphe de recherche (30) et une deuxième représentation (32) entre le deuxième espace de travail (18) et le deuxième graphe de recherche (30) ;

**caractérisé par** les étapes consistant à

- relier le premier graphe de recherche (24) et le deuxième graphe de recherche (30) en un graphe de coordination ; et
- coordonner le déplacement du premier manipulateur (12) et du deuxième manipulateur (14) sur la base de la première carte dynamique (22) et de la deuxième carte dynamique (28) à l'aide du graphe de coordination.

11. Procédé selon la revendication 10, dans lequel le graphe de coordination est le produit cartésien du premier graphe de recherche (24) et du deuxième graphe de recherche (30).

12. Procédé de planification de déplacement sans collision d'un premier manipulateur (12) dans un premier espace de travail (16) et d'un deuxième manipulateur (14) dans un deuxième espace de travail (18), le premier et le deuxième espace de travail (16, 18) se recoupant au moins en partie, comprenant les étapes consistant à :

- lire une première carte dynamique (22) pour un premier espace de configuration du premier manipulateur (12), la première carte dynamique (22) comprenant un premier graphe de recherche (24) et une première représentation (26) entre le premier espace de travail (16) et le premier graphe de recherche (24) ; et
- lire une deuxième carte dynamique (28) pour un deuxième espace de configuration du deuxième manipulateur (14), la deuxième carte dynamique (28) comprenant un deuxième graphe de recherche (30) et une deuxième représentation (32) entre le deuxième espace de travail (18) et le deuxième graphe de recherche (30) ;

**caractérisé par** les étapes consistant à

- coordonner le déplacement du premier manipulateur (12) et du deuxième manipulateur (14) sur la base de la première carte dynamique (22) et de la deuxième carte dynamique (28), la première ou la deuxième carte dynamique (22, 28) étant une carte dynamique étendue qui comporte un graphe de recherche étendu avec des noeuds qui comprennent des informations temporelles supplémentaires.

13. Dispositif comprenant un premier manipulateur (12) et un deuxième manipulateur (14) ainsi qu'une unité de commande pour la planification de déplacement dynamique, l'unité de commande étant réalisée pour effectuer un procédé selon l'une quelconque des revendications 1 à 12.

Fig. 1

**Fig. 2**

**Fig. 3**

$$CG = PG_{M1} \boxtimes PG_{M2}$$

121a

$$CG = PG_{M1} \square \ G_{M2}$$

121b

$$CG = G_{M1} \square \ G_{M2}$$

121c

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010007458 A1

**In der Beschreibung aufgeführte Nicht-Patentliteratur**

- A dynamic subgoal path planner for unpredictable environments. **HONG LIU et al.** 2010 IEEE INTERNATIONAL CONFERENCE ON ROBOTICS AND AUTOMATION : ICRA 2010 ; ANCHORAGE, ALASKA, USA. IEEE, 03. Mai 2010, 994-1001